# EUROPEAN PATENT SPECIFICATION

(11) **EP 2 015 923 B1**
(45) Date of publication and mention of the grant of the patent: **27.02.2013**
(21) Application number: 07718854.8
(22) Date of filing: 08.05.2007
(51) Int. Cl.: B29D 11/00

(54) **METHODS FOR FORMING COATED HIGH INDEX OPTICAL ELEMENTS**
VERFAHREN ZUR HERSTELLUNG VON OPTISCHEN ELEMENTEN MIT HOHEM BRECHUNGSINDEX
PROCEDES DE FORMATION D'ELEMENTS OPTIQUES REVETUS A INDICE ELEVE

(30) Priority: 09.05.2006 AU 2006902419
(43) Date of publication of application: 21.01.2009
(73) Proprietor: Carl Zeiss Vision Australia Holdings Ltd., Lonsdale, SA 5160 (AU)
(72) Inventor: DIGGINS, David, Flagstaff Hill, South Australia 5159 (AU); PITTOLO, Michael, Glenelg, South Australia 5045 (AU)
(74) Representative: Jenkins, Peter David
(86) International application number: PCT/AU2007/000607
(87) International publication number: WO 2007/128071

(56) References cited:
- WO-A1-95/09724
- US-A- 4 774 035
- US-A- 4 800 123
- US-A- 5 049 321
- US-A1- 2004 125 335

## Description

### Field of the Invention

The present invention relates to methods for forming high index optical elements, such as ophthalmic lenses. More particularly, the present invention relates to methods for forming hard coated high index optical elements, and to hard coated high index optical elements formed according to the methods described herein.

### Background of the Invention

Optical elements including ophthalmic lenses and lenses for cameras, microscopes, telescopes, and the like are commonly formed from plastics. Some of the common plastic materials that are used to manufacture ophthalmic lenses include polyethylene glycol diallyl dicarbonate (CR39™) and polycarbonate.

In response to a need to produce thinner lenses, a number of "high index" plastic materials have been developed for the manufacture of ophthalmic lenses. These high index materials have a higher refractive index than other conventional plastic materials, which means that they bend light more than the conventional plastic materials. As a result, less high index lens material needs to be used to produce the same prescription than with a conventional plastic material. This results in lenses that are lighter with thinner edges.

In most cases, plastic optical elements are supplied with one or more coatings that impart desired physical, optical or chemical properties on the element. For example, many plastic ophthalmic lenses are supplied with a hard coat formed from a material that is more abrasion resistant than the lens material itself. For example, silica based hard coats extend the useable life of the plastic material by increasing abrasion resistance and weatherability.

However, it has been found that interference patterns form when low index hard coats are applied to optical elements that are formed from high index lens materials. The formation of interference rings is due to a refractive index mismatch between the hard coat material and the plastic substrate material. In order to avoid the formation of interference rings, index matched coatings are used. However, these coatings are expensive and add to the process complexity of hard coating in a manufacturing site.

There is a need for improved methods and materials for forming high index optical elements having a hard coat. Methods that allow for the formation of hard coated high index optical elements that exhibit minimal interference patterns without increasing the complexity of the manufacturing process are desirable.

US-A-4,774,035 discloses an abrasion-resistant coated plastic lens element and a method for coating the element.

US-A-5,049,321 discloses a method for coating a plastic lens element including applying a coating composition consisting substantially of reactants having at least triacrylate functionality, a photoinitiator and a polymerization inhibitor reactive with oxygen to the face of a mould.

US-A-4,800,123 discloses a scratch resistant coating for peroxide curable urethane elastomers comprising a radiation curable composition, and a method for coating products with the coating.

WO 95/09724 discloses a process for preparing laminated moulded plastic articles, the process comprising applying to a mould surface a 100% reactive coating composition, at least partially curing the coating composition by either UV or IR radiation, applying to the exposed surface of the cured coating composition a thermoplastic material and curing the thermoplastic material to form the laminated moulded article.

A reference herein to a patent document or other matter which is given as prior art is not to be taken as an admission that that document or matter was known or that the information it contains was part of the common general knowledge.

### Summary of the Invention

The present invention arose from research into methods and materials that can be used to form hard coated ophthalmic lenses that are formed from high index materials. We have found that high index lenses of this type can be formed using an in-mould coating process. In particular, we have found that controlled mixing of conventional, non-high index hard coat materials and high index lens material at the interface between the hard coat and the bulk lens material prior to lens curing allows for the formation of a hard coated high index lens without interference patterns.

The present invention provides a method of forming a coated optical element, the method including:
- providing a mould assembly having opposed mould sections, each mould section having a casting face, the casting faces forming a mould cavity in the mould when assembled;
- applying a UV-curable hard coat monomer composition to at least part of the casting face of at least one of the mould sections to form a hard coat monomer layer;
- irradiating the hard coat monomer layer with UV radiation under conditions to form a partially cured hard coat layer;
- filling the assembled mould with a high index optical element precursor material; and
- curing the optical element precursor material and the partially cured hard coat layer to form a high index optical element having a hard coat, characterised in that the high index optical element precursor material is selected from one or more of the group consisting of thiourethanes, episulfides and FINALITE® (a monomer mix of an acrylic or methacrylic monomer, a di- or polythiol compound and a di- or polyvinyl monomer.

The present invention also provides a method for hard coating a high index optical element, the method including:
- providing a mould assembly having opposed mould sections, each mould section having a casting face, the casting faces forming a mould cavity in the mould when assembled,
- applying a UV-curable hard coat monomer composition to at least part of the casting face of at least one of the mould sections to form a hard coat monomer layer;
- irradiating the hard coat monomer layer with UV radiation under conditions to form a partially cured hard coat layer;
- filling the assembled mould with a high index optical element precursor material; and
- curing the optical element precursor material and the partially cured hard coat layer to form a high index optical element having a hard coat, characterised in that the high index optical element precursor material is selected from one or more of the group consisting of thiourethanes, episulfides and FINALITE® (a monomer mix of an acrylic or methacrylic monomer, a di- or polythiol compound and a di- or polyvinyl monomer.

The UV-curable hard coat monomer composition may be a UV-curable (meth)acrylate monomer, a UV-curable epoxy monomer, or a mixture thereof.

The present invention further provides a high index optical element having a hard coat formed according to any one of the methods of the present invention. For casting lenses, the mould will typically comprise two opposed mould sections, with the casting face of a first mould section forming the front surface of a lens, and the casting face of a second mould section forming the back surface of the lens. One or both of the casting faces may include an optical surface for imparting a desired optical configuration on the front and/or back surface of a lens. The UV-curable hard coat monomer composition may be applied to the casting face of the first mould section, the second mould section, or both mould sections. The hard coat monomer composition may be applied to all or part of the casting face, although it will typically be applied to the entire casting face. Thus, the methods of the present invention may be used to form finished or semi-finished ophthalmic lenses.

Without intending to be bound by any particular theory, it is thought that the formation of a partially cured hard coat layer means that some UV-curable hard coat monomer remains in the hard coat layer so that when the high index optical element precursor material is added to the mould, there is an intermixing of the UV-curable hard coat monomer and the high index optical element precursor material at the interface between the lens substrate and the hard coat layer. When the composition(s) are subsequently cured, a diffuse hardened interface is formed between the lens substrate and the hard coat layer, and it is thought that the diffuse interface minimises the occurrence of interference patterns.

The present invention also provides a method of forming a coated optical element, the method including:
- providing a mould assembly having opposed mould sections, each mould section having a casting face, the casting faces forming a mould cavity in the mould when assembled;
- applying a UV-curable hard coat monomer composition to at least part of the casting face of at least one of the mould sections to form a hard coat monomer layer;
- irradiating the hard coat monomer layer with UV radiation under conditions to form a partially cured hard coat layer;
- filling the assembled mould with a high index optical element precursor material so as to form a diffuse interface between the high index optical element precursor material and the partially cured hard coat layer; and
- curing the optical element precursor material and the partially cured hard coat layer to form a high index optical element having a hard coat, characterised in that the high index optical element precursor material is selected from one or more of the group consisting of thiourethanes, episulfides and FINALITE® (a monomer mix of an acrylic or methacrylic monomer, a di- or polythiol compound and a di- or polyvinyl monomer..

Various terms that will be used throughout the specification have meanings that will be well understood by a skilled addressee. However, for ease of reference, some of these terms will now be defined.

The term "optical element" as used throughout the specification is to be understood to include lenses for optical devices such as cameras, microscopes, telescopes, or for the refracting or reflecting of light (eg mirrors) in any scientific or medical device, eyeglass lenses of all types, including ophthalmic lenses, whether they be refractive or plano.

The term "lens substrate" as used throughout the specification is to be understood to mean an organic liquid which, when cured, forms a solid at room temperature and provides optical properties consistent with those required for an ophthalmic lens.

The terms "high index material", "high index optical element", or similar terms, as used throughout the specification are to be understood to mean a material, element or object having a refractive index of at least approximately 1.55.

The term "hard coat" (and variations) as used throughout the specification is to be understood to mean a coating having a level of abrasion resistance that is commercially acceptable for the intended use of the optical element. For example, the abrasion resistance of ophthalmic lenses having a hard coat can be demonstrated using standard industry tests such as the Bayer abrasion test and the steel wool abrasion test.

The term "UV-curable" as used throughout the specification is to be understood to mean a composition that can be fully or partially polymerised by irradiation with ultraviolet (UV) light. UV-curable monomer compositions typically contain a photoinitiator which starts the polymerisation reaction of the monomers under UV light. The photoinitiator may be a radical photoinitiator, a cationic photoinitialor, or an anionic photoinitiator.

The term "monomer" as used throughout the specification is to be understood to mean any molecule that can react so as to be bound as a unit of a polymer.

The term "(meth)acrylate" as used throughout the specification is to be understood to mean either an acrylate group or a methacrylate group.

The term "epoxy" as used throughout the specification is to be understood to mean a group of general formula: 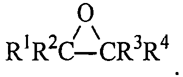 In some examples, R¹ and R³ are both H, R² is an optionally substituted alkyl group, and R⁴ is an optionally substituted alkyl group or H.

### Detailed Description of the Invention

It will be apparent from the following description that the methods and materials of the present invention are suitable for use in the manufacture of ophthalmic lenses. However, it will be appreciated that the methods and materials are not limited to that particular application.

The methods of the present invention can be used to form coated optical elements. The methods utilise in mould coating processes, at least some aspects of which are known in the art - for example see United States Patent 4,544,572 (which exemplies in mould coating processes). Briefly, an in mould coating process typically involves applying a prepolymer coating composition to a face of a mould section, partially curing the composition, assembling mould sections to form a mould, filling the mould with a lens monomer, and curing the lens monomer to form a coated lens.

The first step in the methods of the present invention is the provision of a mould assembly having opposed mould sections. Each of the mould sections has a casting face. When the mould sections are assembled to form the mould, the casting faces form a mould cavity in the mould. If the methods of the present invention are used to form ophthalmic lenses, the mould will usually comprise two opposed mould sections, with the casting face of a first mould section forming the front surface of the lens, and the casting face of a second mould section forming the back surface of the lens.

Moulds used in the manufacture of ophthalmic lenses are typically made from glass, plastic or metal. In the case of the methods of the present invention, the hard coat monomer layer is UV-cured and therefore it is necessary for at least one of the mould sections to have a UV transparent area to enable UV irradiation of the material in the assembled mould. Preferably, the mould sections are wholly formed from a UV transparent material, such as a glass, polycarbonates, polyamides, polyimides, polysulfones, etc. Glass is preferred.

A UV-curable hard coat monomer composition is applied to the casting face of at least one of the mould sections to form a hard coat monomer layer. The composition may be applied to one or more of the mould surfaces by any of the coating techniques that are known in the art, such as spraying, dipping, brushing, flow coating, and spin coating.

The UV-curable hard coat monomer composition may be a (meth)acrylate monomer and/or an epoxy monomer capable of being UV-cured to form a hard coat.

Suitable (meth)acrylate monomers that can be used include any UV-curable (meth)acrylate that forms a commercially acceptable hard coat upon curing. Exemplary polymerisable (meth)acrylate monomers include, but are not limited to: pentaerythritol tetraacrylate, tris[2-(acryloxy)ethyl]isocyanurate), triethylol propyl triacrylate, dipentaerythritol hexacrylate, 2,2,4,4,6,6-hexahydro-2,2,4,4,6,6-hexakis(2-((2-methyl-1-oxo-2-propenyl)oxy)ethoxy)-1,3,5,2,4,6-triazatriphosphorine, U6HA (hexafunctional urethane (meth)acrylate supplied by Shin Nakamura), U4HA (tetrafunctional urethane (meth)acrylate supplied by Shin Nakamura), tricyclodecane dimethanol diacrylate, tris(2-hydroxyethyl)isocyanurate diacrylate, and the like.

The (meth)acrylate monomer composition may be a mixture of a relatively rigid (meth)acrylate monomer, such as any one or more of those listed above, and a flexible difunctional monomer that contains two or more (meth)acrylate groups bonded to a relatively flexible backbone.

By way of example, suitable flexible difunctional monomers may be selected from the list including alkylene diacrylates, such as hexane diol acrylate; poly(alkyleneoxide) diacrylates such as polyethylene glycol 200 diacrylate, polyethylene glycol 400 diacrylate, polyethylene glycol 600 diacrylate, tripropylene glycol diacrylate and polypropylene glycol 400 diacrylate; poly(alkyleneoxide) dimethacrylates such as polyethylene glycol 200 dimethacrylate, polyethylene glycol 400 dimethacrylate and polyethylene glycol 600 dimethacrylate. For example, the flexible difunctional monomer may be polyethylene glycol 400 diacrylate, polyethylene glycol 600 diacrylate, polyethylene glycol 400 dimethacrylate or polyethylene glycol 600 dimethacrylate. The flexible difunctional monomer may also be a mixture of any two or more of the listed difunctional monomers.

Further details of hard coat compositions that contain relatively rigid (meth)acrylate monomers and relatively flexible (meth)acrylate monomers can be found in published International patent application WO2003/052011 (which exemplifies suitable polymerisable (meth)acrylate monomer compositions).

The epoxy monomer may be a difunctional, trifunctional, or other multi-functional epoxy monomer. The epoxy monomer may also contain other functional groups. For example, the epoxy monomer may be a silane having two or more epoxy groups per molecule.

Specific examples of polymerisable epoxy monomers include ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, neopentyl glycol diglycidyl ether, 1,6 hexanediol diglycidyl ether, glycerine diglycidyl ether, pentaerythritol diglycidyl ether, trimethylol propane triglycidyl ether, pentaerythritol triglycidyl ether, glycerol triglycidyl ether, diglycerol triglycidyl ether, diglycerol tetraglycidyl ether, pentaerythritol tetraglycidyl ether, dipentaerythritol tetraglycidyl ether, bisphenol-A diglycidyl ether (BPADGE), bisphenol-F diglycidyl ether, and their extended chain analogs, 1,4-butanediol diglycidyl ether, diglycidyl ethers of tetrabromo-bisphenol-A, epoxy based ethers of 4,4'-biphenylene, such as 4, 4'-diglycidyloxybiphenyl, and and the like.

Specific examples of polymerisable epoxy monomers having an average of two epoxy groups in the molecule include aliphatic polyethylene glycol diglycidyl ether, polypropylene glycol diglycidyl ether, tetramethylene glycol diglycidyl ether, 1,6-hexamethylene glycol diglycidyl ether, neopenthyl glycol diglycidyl ether, glycerin diglycidyl ether; pentaerythritol diglycidyl ether, alicyclic hydrogenated bisphenol A diglycidyl ether, hydrogenated diglycidyl isophthalic acid ester, 3,4-epoxy cyclohexyl methyl-3,4-epoxy cyclohexane carboxylate, bis(3,4-epoxy cyclohexyl)adipate; diglycidyl hydantoin, diglycidyl oxyalkyl hydantoin; aromatic bisphenol A diglycidyl ether, bisphenol A diglycidyl ether initial condensate, diphenylmethane diglycidyl ether, diglycidyl terephthalic acid ester, diglycidyl isophthalic acid ester, and diglycidyl aniline.

Specific examples of polymerisable epoxy monomers having an average of three epoxy groups in the molecule include aliphatic trimethylol propane triglycidyl ether, pentaerythritol triglycidyl ether, glycerol triglycidyl ether, diglycerol triglycidyl ether, triglycidyl isocyanurate, triglycidyl cyanurate, triglycidyl hydantoin; and aromatic triglycidyl para- or meta-aminophenol.

Specific examples of polymerisable epoxy monomers having an average of four epoxy groups in the molecule include diglycerol tetraglycidyl ether, pentaerythritol tetraglycidyl ether, dipentaerythritol tetraglycidyl ether, tetraglycidyl benzyl ethane, sorbitol tetraglycidyl ether, tetraglycidyl diaminophenyl methane, and tetraglycidyl bisaminomethyl cyclohexane.

Specific examples of polymerisable epoxy monomers having an average of two to several epoxy groups include phenol novolac epoxy resin, and cresol novolac epoxy resin.

Epoxy monomers that have the highest crosslink densities when polymerised may be used. As a general rule, the higher the crosslink density, the higher the abrasion resistance. With this criterion, low molecular weight epoxy monomers with high functionality are suitable. With the above list the trifunctional and tetrafunctional epoxy monomers are particularly suitable. Examples of specific monomers include trimethylol propane triglycidyl ether, pentaerythritol triglycidyl ether, glycerol triglycidyl ether, triglycidyl isocyanurate, triglycidyl cyanurate, triglycidyl hydantoin, pentaerythritol tetraglycidyl ether, dipentaerythritol tetraglycidyl ether and tetraglycidyl benzyl ethane.

The UV-curable hard coat monomer composition may be a mixture of any one of the aforementioned (meth)acrylate monomers and any one or more of the aforementioned epoxy monomers.

The use of a UV-curable hard coat monomer composition provides certain advantages in the methods of the present invention. Firstly, UV-curing is faster than thermal curing. Secondly, we find that there is greater control over the degree of partial polymerisation of the hard coat monomer composition under UV-cure conditions, as opposed to the thermal cure conditions that are described or referred to in published United States patent application No. US 2003/0116872 (Klemm et al.), for example.

The hard coat monomer layer may contain additives. The additives will typically be added to the hard coat monomer composition, although in some instances it may be possible to add the additives to the hard coat monomer layer, either before or after it has been partically cured.

Hardness enhancers may be incorporated in to the hard coat monomer layer. The hardness enhancer may be a metal oxide, such as colloidal silica. (Meth)acrylated or epoxylated colloidal silica may be used for this purpose. For compatibility reasons (meth)acrylated colloidal silica is particularly suitable.

An effective amount of a levelling or flow control agent can be incorporated into the UV-curable hard coat monomer composition to more evenly spread or level the composition on the casting face of the mould section.

In addition, other additives can be added to the UV-curable hard coat monomer composition in order to enhance the usefulness of the coating produced by curing the composition. For example, ultraviolet absorbers, antioxidants, photochromics and the like can be incorporated into the UV-curable hard coat monomer composition, if desired.

A tinting agent may be incorporated into the optical element substrate. Advantageously, we have found that the inclusion of a flexible difunctional monomer in the hard coat monomer composition leads to the formation of a hard coat layer that can be tinted. For example, the inclusion of an amount of polyethylene glycol di(meth)acrylate (such as polyethylene glycol 400 di(meth)acrylate) allows for non-tintable or difficult to tint lens substrates (such as FINALITE® and MR10®) to be tinted. In these cases the hard coat layer absorbs tinting agent. For tintable substrates the tintable coating allows for both the migration of tint through to the substrate and the absorption of tint within itself. Suitable tinting agents include dyes that are typically used by optical laboratories, such as BPI dyes from Brain Power Incorporated, Perma Dyes from Inland, Shades Lens Dyes from Cerium Optical. The process of tinting typically involves the immersion of a lens in a heated solution (generally water based) of dissolved dyes. However, an alternate tint process does exist whereby lenses can be immersed in a dye solution that is subsequently heated in a microwave.

To enable the UV-curable hard coat monomer composition to be applied to the casting face in a desired thickness, the composition will typically contain a solvent. It will be appreciated that a number of solvents could be used for this purpose. Examples of suitable solvents are lower alcohols (such as methanol, ethanol, isopropanol etc), ketones (such as acetone), esters (such as ethyl acetate), hydrocarbons (such as toluene, xylene etc) and halogenated hydrocarbons (such as dichloromethane).One of the roles of the solvent in the UV-curable hard coat monomer composition is to facilitate the coating process. With some of the coating processes, such as spin coating, the viscosity of the composition is a factor in determining the thickness of the applied coating. Thus, by selection of the type and amount of solvent, it is possible to coat the casting face of at least one of the mould sections with a hard coat monomer layer of desired thickness. The coating thickness may be between about 2 microns and about 30 microns, more specifically between about 5 microns and about 10 microns. If it is desired for the in-mould coating layer to encapsulate UV absorbers or photochromics a thicker coating is typically required. However, the disadvantage of a thicker coating is the difficulty in maintaining acceptable cosmetics. A coating that is too thin will either not be sufficiently mechanically durable during the in-mould coating process or may not have sufficient abrasion resistance as a lens coating.

If the UV-curable hard coat monomer composition does include a solvent, the solvent may be removed prior to the partial curing step or prior to the mould being filled. The solvent can be removed by air drying or by the use of infrared radiation, microwave radiation or heat.The UV-curable hard coat monomer composition may be coated onto all or part of a casting face of the mould section. For most applications all of the casting face will be coated. The casting face of any one or more of the mould sections may be coated. For the purpose of casting an ophthalmic lens, it is possible to coat the casting face of the first mould section and/or the second mould section, thus leading to a hard coat layer on the front and/or back surface of the lens, respectively.

Following coating of the casting face of the mould section, the polymerisable hard coat monomer composition is irradiated with UV radiation to form a partially cured hard coat layer.

The curing is carried out in the presence of a UV-photoinitiator. The photoinitiator may be a radical photoinitiator, a cationic photoinitialor, or an anionic photoinitiator. Radical, cationic and anionic photoinitiators are commercially available from Sartomer, Ciba-Geigy, Dow Chemical, and BASF.

If the UV-curable hard coat monomer composition is a (meth)acrylate monomer composition then radical, cationic or anionic photoinitiation may be used. Many suitable radical photoinitiators are available commercially and will be known to the person skilled in the art. Examples of radical photoinitiators include, but are not limited to: anthraquinone, benzophenone, substituted benzophenones, benzoin, benzoin alkyl ethers, 1-hydroxycyclohexyl phenyl ketone, 2-hydroxy-2-methylpropiophenone, acetophenone, substituted acetophenones, benzoyl-diphenylphosphine oxides, substituted benzoyl-diphenylphosphine oxides, di benzoyl-diphenylphosphine oxides, and substituted di benzoyl-diphenylphosphine oxides.

However, if the UV-curable hard coat monomer composition contains an epoxy monomer then ionic photoinitiation may be necessary. Any of the many compounds known to initiate polymerisation by a cationic or anionic mechanism may be used. Compounds known to initiate polymerisation by a cationic mechanism include, for example, diaryliodonium salts, triarylsulfonium salts, diaryliodosonium salts, dialkylphenylsulfonium salts, dialkyl(hydroxydialkylphenyl)sulfonium salts and ferrocenium salts. Such salts may be modified by the attachment of alkyl, alkoxy, siloxy and the like groups. Particularly useful initiators include (4-n-decyloxyphenyl) phenyliodonium hexafluoroantimonate, (4-n-decyloxyphenyl)diphenylsulfonium hexafluoroantimonate and S-methyl-S-n-dodecylphenacylsulfonium hexafluoroantimonate.

The amount of polymerisation initiator used and the conditions of polymerisation will be readily determined by those skilled in the art, or can easily be determined empirically. Typically, the polymerisation initiator is employed in concentrations ranging from 0.01 to 10% w/w of solids.

In order to achieve sufficient adhesion to the lens substrate and sufficient mechanical durability to withstand the in-mould coating process a balance between overcure and undercure needs to achieved. If the in-mould coating is undercured the in-mould coating will redissolve when the mould is assembled and filled with monomer. If it is overcured there will be no reactive sites within the coating to react with the monomer. Although the exact curing conditions will depend upon the specific formulation used, we have found that an irradiation intensity of 0.62W/cm² and a dose of 440mJ/cm² is satisfactory.

After the desired level of curing of the partially cured hard coat layer is obtained, the mould is assembled such that the partially cured hard coat layer is incorporated into a surface of the mould cavity. The assembled mould (more specifically the mould cavity) is then filled with a high index optical element precursor material.

A number of high index optical element precursor materials are available and may be used. Indeed, any material that that has a refractive index of at least 1.55 and produces an optically clear substrate can be used. Polymers containing aromatic compounds, or atoms of high atomic weight such as sulfur, bromine or metals generally have a higher index of refraction. Examples of classes of materials that have been used to produce high index optical elements include thiourethanes (such as the MR series of resins from Mitsui Chemicals), episulfides (such as those supplied by Mitsubishi Gas), and FINALITE®.

Specific non-limiting examples of thiourethane systems that can be used include the thiourethane systems that are formed from the reaction of pentaerythritol tetramercaptoproprionate and xylylene diisocyanate; 2-(2-mercaptoethylthio)-1,3-dimercaptopropane and xylylene diisocyanate; 2,5-bis(3-mercaptopropyl)-1,4-dithian and xylylene diisocyanate and the isocyanate and polythiol systems such as those described in United States patents 5,608,115 and 5,306,799.

Examples of episulfide systems that can be used for this system include the episulfides such as bis(β-epithiopropyl)sulphide as described in United States patent 5,807,975 and bis(β-epithiopropyl)disulphide as described in United States patent 6,300,464.

A significant portion of high index lens substrates are based on thiourethane materials. In this case, multifunctional isocyanate monomers are reacted with multifunctional thiol monomers. Isocyanates react with the silanol groups present on a glass surface. Isocyanate monomer is able to diffuse through the partially cured in-mould coating to cause excessive adhesion of the lens substrate to the mould resulting in glass pullouts when it is attempted to remove the lens from the mould. In order to prevent this it is necessary to either surface modify the glass mould to prevent the isocyanate functional groups from reacting with the silanol groups or to use a high level of release agent.

Surface modification may involve capping the silanol groups with a material that renders the surface chemically inert. Silanes are commonly used to surface modifiy glass surfaces. A suitable silane needs to have a functional group that is able to react with the silanol groups on the glass surface. Suitable functional groups include alkoxysilanes and halosilanes. Chlorosilanes are especially preferred due to their high reactivity. Specific examples of suitable monofunctional chlorosilanes include: (3,3,3-trifluoropropyl)trichlorosilane, propyl trichlorosilane, octadecyltrichlorosilane, phenyl trichlorosilane, trichloro(1H,1H,2H,2H perfluorooctyl) silane, 3,3,3-(trifluoropropyl)trichlorosilane and so on. Apart from the ability of silanes to cap the silanol groups on the glass surface, consideration needs to be given to surface free energy of the silane modified surface. If the surface free energy is too low it is difficult for the in-mould coating resin to wet the mould surface. This may preclude the use of some of the more highly fluorinated chlorosilanes. These monofunctional silanes provide a monolayer coverage of the mould surface. Although these silane treatments are sufficient to prevent excessive mould adhesion for a number of casts, the monolayer coverage may not be sufficiently durable for repeated casts. In order to improve the durability of the surface modification process, it may be beneficial to have multiple layers of a silane on the glass surface. In order to achieve this, a multiple layer silane treatment can be achieved by incorporating multifunctional silane that will enable the formation of a crosslinked system. Examples of a multifunctional silane that can be used in conjunction with monofunctional silanes are 1,6-bis(trichlorosilyl)hexane, 1,6-bis(trichlorosilyl)ethane, and on the like.

Excessive mould adhesion can also be reduced by the use of high levels of release agent. An example of an appropriate release agent that can be used is Zelec UN (manufactured by Stepan).

In recent years, episulfide based systems have become available to produce high index and ultrahigh index lens materials. Unlike the isocyanate monomers of the thiourethane systems, episulfides do not directly react with the silanol groups on a mould surface. Therefore, there is no need for mould treatment.

The episulfide systems enable indices up to 1.8 to be obtained. At these extreme high indices, an in mould coating system with a refractive index of 1.50 may have some interference rings. In these cases, it may be necessary to use an in-mould coating resin that has a higher refractive index. An in-mould coating of 1.60 index is sufficient to have a minimal level of interfence rings even with a 1.80 index substrate. The refractive index of an in-mould coating resin can be increased by the addition of high index colloidal particles such as titanium dioxide, zirconium dioxide, antimony oxide and so on.

Once the mould is filled, the high index optical element precursor material is cured. High index optical element precursor materials that are generally available are thermally cured. However, UV-curable high index optical element precursor materials may also be used. During the curing step, the partially cured hard coat layer also undergoes further curing. Consequently, the hardened high index optical element precursor material and the adjacent cured hard coat layer form a diffuse interface which provides good adhesion. The adhesion between the coating and the lens substrate is preferably such that the lens can survive accelerated weathering, outdoor weathering, and 3 hour boil tests and the like, without loss of adhesion or other degradation of the lens.

Once hardened, the cast ophthalmic lens can be removed from the mould. As the adhesion of the hard coat to the lens substrate is greater than the adhesion to the casting face of the mould, the ophthalmic lens separates from the mould. As discussed previously, if adhesion of the hard coat to the casting face of the mould is too strong, the lens may pull out glass from the casting face upon removal from the mould. Alternatively, separation of the coating from the mould during cure will occur if the adhesion of the hard coat to the casting face is not strong enough. As discussed previously, the adhesion of coating layers to mould surfaces can be affected by surface modification of the mould surface.

The methods described herein may include further coating steps. For example, the hard coat layer may not be coated directly onto the casting face of the mould section. Instead, there may be further coating layers on the mould section, with each similarly applied over the previous coating layer and each treated to prevent damage during subsequent steps in the method. As a final step prior to mould assembly and filling, the UV-curable hard coat monomer composition may be applied.

Furthermore, subsequent coatings may be applied via conventional coating methods after the in-mould coated optical element has been formed and removed from the mould. For example, a hard coated high index optical element (formed in accordance with the methods of the present invention) may be subsequently coated with a multilayer anti-reflection coating stack via conventional technology.

It will be clear from the foregoing discussion that the methods of the present invention can be used to produce a high index optical element, such as an ophthalmic lens, having an optically clear, hard coating on one or more of its optical surfaces. In addition, the methods of the present invention can be used to provide multilayer coatings incorporating coatings such as anti-reflection coatings, mirror coatings, impact enhancement layers, photochromic dye layers and tint layers.

### Description of Embodiments of the Invention

Several examples will now be provided in order to illustrate preferred embodiments of the present invention. However, it is to be understood that the following description is not to limit the generality of the above description.

### Example 1

### Mould treatment

Mould sections to be silane treated are immersed for 1 minute in a 1% by weight solution of (3,3,3-trifluoropropyl)trichlorosilane in a light petroleum solvent mix.

The moulds are removed and allowed to dry for 20 minutes. The excess coating is wiped off with a cloth soaked in acetone.

### UV-curable hard coat monomer composition

A solution of 6.78% w/w of polyethylene glycol (400) diacrylate, 2.91% w/w of tris[2-(acryloxy)ethyl]isocyanurate, 3.5% w/w of acrylated colloidal silica , 86% w/w of methyl acetate, 0.7% w/w of benzophenone and 0.112% w/w of Byk® 371 is mixed.

### Formation of partially cured hard coat layer

Mould sections are flow coated with UV-curable hard coat monomer composition solution. The UV-curable hard coat monomer on the coated mould sections is partially cured by exposing the mould sections to a UV curing lamp providing an irradiation intensity of 0.62W/cm² and a dose of about 440mJ/cm².

### Formation of coated high index optical element

Back and front mould sections are then assembled and the mould is filled with MR7® monomer mix as supplied by Mitsui Chemicals and cured using standard curing conditions.

### Example 2

### Mould treatment

Mould sections to be silane treated are immersed for 1 minute in a 1% by weight solution of dichlorodiphenyl silane in a light petroleum solvent mix. The mould sections are removed and allowed to dry for 20 minutes. The excess coating is wiped off with a cloth soaked in acetone.

### UV-curable hard coat monomer composition

A solution of 6.78% w/w of polyethylene glycol (400) diacrylate, 2.91% w/w of tris[2-(acryloxy)ethyl]isocyanurate, 3.5% w/w of acrylated colloidal silica , 86% w/w of methyl acetate, 0.7% w/w of benzophenone and 0.112% w/w of Byk® 371 is mixed.

### Formation of partially cured hard coat layer

Mould sections are flow coated with the UV-curable hard coat monomer composition solution. The UV-curable hard coat monomer on the coated mould sections is partially cured by exposing the moulds to a UV curing lamp providing an irradiation intensity of 0.62W/cm² and a dose of about 440mJ/cm².

### Formation of coated high index optical element

Back and front mould sections are then assembled the mould is filled with a FINALITE® monomer mix (proprietary material to Carl Zeiss Vision) as described in United States Patent 6,313,251, United States Patent 6,166,158 and United States Patent 5,977,276 and cured using standard curing conditions.

### Example 3

### Mould treatment

No mould treatment process required.

### UV-curable hard coat monomer composition

A solution of 6.78% w/w of polyethylene glycol (400) diacrylate, 2.91% w/w of tris[2-(acryloxy)ethyl]isocyanurate, 3.5% w/w of acrylated colloidal silica , 86% w/w of methyl acetate, 0.7% w/w of benzophenone and 0.112% w/w of Byk® 371 is mixed.

### Formation of partially cured hard coat layer

Mould sections are flow coated with the UV-curable hard coat monomer composition solution. The UV-curable hard coat monomer on the coated mould sections is partially cured by exposing the mould sections to a UV curing lamp providing an irradiation intensity of 0.62W/cm² and a dose of about 440mJ/cm².

### Formation of coated high index optical element

Back and front mould sections are then assembled and the mould is filled with 1.70 episulfide monomer mix as supplied by Mitsubishi Gas and cured using standard curing conditions.

### Example 4

### Mould treatment

Mould sections to be silane treated are immersed for 1 minute in a 1% by weight solution of (3,3,3-trifluoropropyl)trichlorosilane in a light petroleum solvent mix. The mould sections are removed and allowed to dry for 20 minutes. The excess coating is wiped off with a cloth soaked in acetone.

### UV-curable hard coat monomer composition

A solution is formulated in accordance to Example 5 of United States patent 4,544,572 whereby a solution of 60g of hydantoin hexaacrylate, 40g of pentaerythritol tetraacrylate, 896.75g methylene chloride, 3g of Irgacure® 651 and 0.25g of FC-431 is mixed.

### Formation of partially cured hard coat layer

Mould sections are flow coated with the UV-curable hard coat monomer composition solution. The UV-curable hard coat monomer on the coated mould sections is partially cured by exposing the mould sections to a UV curing lamp providing an irradiation intensity of 0.62W/cm² and a dose of about 440mJ/cm².

### Formation of coated high index optical element

Back and front mould sections are then assembled and the mould is filled with MR7® monomer mix as supplied by Mitsui Chemicals and cured using standard curing conditions.

### Example 5

### Mould treatment

Mould sections to be silane treated are immersed for 1 minute in a 1% by weight solution of (3,3,3-trifluoropropyl)trichlorosilane in a light petroleum solvent mix. The moulds are removed and allowed to dry for 20 minutes. The excess coating is wiped off with a cloth soaked in acetone.

### UV-curable hard coat monomer composition

A solution of 60g of U46A from Shin Nakamura, 40g of pentaerythritol tetraacrylate, 896.75g methylene chloride, 3g of Irgacure 651 and 0.25g of FC-431 is mixed.

### Formation of partially cured hard coat layer

Mould sections are flow coated with the UV-curable hard coat monomer composition solution. The UV-curable hard coat monomer on the coated mould sections is partially cured by exposing the mould sections to a UV curing lamp providing an irradiation intensity of 0.62W/cm² and a dose of about 440mJ/cm².

### Formation of coated high index optical element

Back and front mould sections are then assembled and the mould is filled with MR7® monomer mix as supplied by Mitsui Chemicals and cured using standard curing conditions.

### Example 6

### Mould treatment

Mould sections to be silane treated are immersed for 1 minute in a 1% by weight solution of (3,3,3-trifluoropropyl)trichlorosilane in a light petroleum solvent mix. The moulds are removed and allowed to dry for 20 minutes. The excess coating is wiped off with a cloth soaked in acetone.

### UV-curable hard coat monomer composition

A solution of 8.4% w/w of polyethylene glycol (400) diacrylate, 2.1 % w/w of tris[2-(acryloxy)ethyl]isocyanurate, 2.8% w/w of acrylated colloidal silica , 86% w/w of methyl acetate, 0.7% w/w of Irgacure® 651 and 0.112% w/w of Byk® 300 is mixed.

### Formation of partially cured hard coat layer

Mould sections are flow coated with UV-curable hard coat monomer composition solution. The UV-curable hard coat monomer on the coated mould sections is partially cured by exposing the mould sections to a UV curing lamp providing an irradiation intensity of 0.62W/cm² and a dose of about 440mJ/cm².

### Formation of coated high index optical element

Back and front mould sections are then assembled and the mould is filled with MR10® monomer mix as supplied by Mitsui Chemicals and cured using standard curing conditions.

### Example 7

### Mould treatment

It is proposed that mould sections to be silane treated are immersed for 1 minute in a 1% by weight solution of (3,3,3-trifluoropropyl)trichlorosilane in a light petroleum solvent mix. The mould sections will then be removed and allowed to dry for 20 minutes. The excess coating will then be wiped off with a cloth soaked in acetone.

### UV-curable hard coat monomer composition

It is proposed that a solution containing 4.45% w/w of pentaerythritol tetraacrylate, 6.67% w/w trimethylolpropane triglycidyl ether, 2.1% w/w of acrylated colloidal silica, 86% w/w methylene chloride, 0.7% w/w of triarylsufonium hexafluorophosphate, 0.084% w/w Byk® 371 is mixed.

### Formation of partially cured hard coat layer

Mould sections may then be flow coated with the UV-curable hard coat monomer composition solution. The UV-curable hard coat monomer on the coated mould sections can then be partially cured by exposing the mould sections to a UV curing lamp providing an irradiation intensity of about 0.62W/cm² and a dose of about 440mJ/cm².

### Formation of coated high index optical element

Back and front mould sections may then be assembled and the mould filled with MR7® monomer mix as supplied by Mitsui Chemicals and cured using standard curing conditions.

### Results

The physical properties of ophthalmic lenses formed in accordance with Examples 1 to 6 are shown in Table 1.

In all cases, high index lenses were formed having commercially acceptable abrasion resistance, outdoor weather durability and no significant interference patterns were observed.

**Table 1.**

| | Steel Wool Abrasion Resistance | Outdoor Weather Durability | Interference Rings | Tintability |
|---|---|---|---|---|
| Example 1 | Excellent | Excellent | None | - |
| Example 2 | Excellent | Excellent | None | - |
| Example 3 | Excellent | Excellent | Slight | - |
| Example 4 | Excellent | Excellent | None | - |
| Example 5 | Excellent | Excellent | None | - |
| Example 6 | Excellent | Excellent | None | Good |

Finally, it will be appreciated that various modifications and variations of the methods and articles of the invention described herein will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the present invention.

## Claims

1. A method of forming a coated optical element, the method including:
providing a mould assembly having opposed mould sections, each mould section having a casting face, the casting faces forming a mould cavity in the mould when assembled;
applying a UV-curable hard coat monomer composition to at least part of the casting face of at least one of the mould sections to form a hard coat monomer layer;
irradiating the hard coat monomer layer with UV radiation under conditions to form a partially cured hard coat layer;
filling the assembled mould with a high index optical element precursor material; and
curing the optical element precursor material and the partially cured hard coat layer to form a high index optical element having a hard coat, **characterised in that** the high index optical element precursor material is selected from one or more of the group consisting of thiourethanes, episulfides and FINALITE® (a monomer mix of an acrylic or methacrylic monomer, a di- or polythiol compound and a di- or polyvinyl monomer).

2. A method according to claim 1, wherein the hard coat monomer composition includes a UV-curable hard coat monomer selected from the group consisting of a UV-curable (meth)acrylate monomer, a UV-curable epoxy monomer, and a mixture thereof.

3. A method according to claim 2, wherein the UV-curable (meth)acrylate monomer is selected from the group consisting of pentaerythritol tetraacrylate, tris[2-(acryloxy)ethyl]isocyanurate, trimethylol propyl triacrylate, dipentaerythritol hexacrylate, 2,2,4,4,6,6-hexahydro-2,2,4,4,6,6-hexakis(2-((2-methyl-1-oxo-2-propenyl)oxy)ethoxy)-1,3,5,2,4,6-triazatriphosphorine, U6HA (hexafunctional urethane (meth)acrylate), U4HA (tetrafunctional urethane (meth)acrylate), tricyclodecane dimethanol diacrylate, tris(2-hydroxyethyl)isocyanurate diacrylate, and mixtures thereof.

4. A method according to claim 3, wherein the UV-curable (meth)acrylate monomer composition further contains a flexible difunctional (meth)acrylate monomer, preferably selected from one or more of the group consisting of alkylene di(meth)acrylates and poly(alkyleneoxide) di(meth)acrylates.

5. A method according to claim 4, wherein the alkylene di(meth)acrylate is hexane diol diacrylate.

6. A method according to claim 4, wherein the poly(alkyleneoxide) di(meth)acrylate is selected from one or more of the group consisting of polyethylene glycol 200 diacrylate, polyethylene glycol 400 diacrylate, polyethylene glycol 600 diacrylate, tripropylene glycol diacrylate and polypropylene glycol 400 diacrylate, polyethylene glycol 200 dimethacrylate, polyethylene glycol 400 dimethacrylate and polyethylene glycol 600 dimethacrylate

7. A method according to any one of claims 2 to 6, wherein the hard coat monomer composition includes a mixture of tris[2-(acryloxy)ethyl]isocyanurate and polyethylene glycol diacrylate, preferably in a ratio of 7:3.

8. A method according to any one of claims 2 to 7, wherein the UV-curable epoxy monomer is a difunctional, trifunctional or multi-functional epoxy monomer, preferably selected from one or more of the group consisting of ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, neopentyl glycol diglycidyl ether, 1,6 hexanediol diglycidyl ether, glycerine diglycidyl ether, pentaerythritol diglycidyl ether, trimethylol propane triglycidyl ether, pentaerythritol triglycidyl ether, glycerol triglycidyl ether, diglycerol triglycidyl ether, diglycerol tetraglycidyl ether, pentaerythritol tetraglycidyl ether, dipentaerythritol tetraglycidyl ether, bisphenol-A diglycidyl ether (BPADGE), bisphenol-F diglycidyl ether, and their extended chain analogs, 1,4-butanediol diglycidyl ether, diglycidyl ethers of tetrabromo-bisphenol-A, and epoxy based ethers of 4,4'-biphenylene.

9. A method according to any one of the preceding claims, wherein the UV-curable hard coat monomer composition contains a hardness enhancer, preferably colloidal silica.

10. A method according to any preceding claim, wherein the high index optical element precursor material is a thiourethane.

11. A method according to any one of the preceding claims, wherein the refractive index of the hard coat layer is increased by the addition of high index colloidal particles, preferably selected from the group consisting of titanium dioxide, zirconium dioxide, antimony oxide, and mixtures thereof.

12. A method according to any one of the preceding claims, wherein the optical element is an ophthalmic lens.

13. A high index optical element having a hard coat formed according to the methods of any one of claims 1 to 12.

14. A high index optical element according to claim 13, wherein the optical element is an ophthalmic lens.

## Patentansprüche

1. Verfahren zur Bildung eines beschichteten optischen Elements, wobei das Verfahren aufweist:
Bereitstellen einer Formwerkzeuganordnung mit entgegengesetzten Formabschnitten, wobei jeder Formabschnitt eine Gussfläche aufweist, wobei die Gussflächen bei Zusammenfügen eine Formungskavität in dem Formwerkzeug bilden,
Aufbringen einer UV-härtbaren Hartbeschichtungs-Monomerzusammensetzung auf zumindest einen Teil der Gussfläche von wenigstens einem der Formabschnitte, um eine Hartbeschichtungs-Monomerschicht zu bilden;
Bestrahlen der Hartbeschichtungs-Monomerschicht mit UV-Strahlung unter Bedingungen zum Bilden einer teilgehärteten Hartbeschichtungschicht;
Füllen des zusammengesetzten Formwerkzeugs mit einem Präkursormaterial für ein optisches Element mit hohem Index; und
Härten des Präkursormaterials für das optische Element und der teilgehärteten Hartbeschichtungschicht, um ein optisches Element mit hohem Index mit einer Hartbeschichtung zu bilden, **dadurch gekennzeichnet, dass** das Präkursormaterial für das optische Element mit hohem Index ausgewählt ist aus einem oder mehreren der Gruppe, bestehend aus Thiourethanen, Episulfiden und FINALITE® (eine Monomermischung aus einem Acryl- oder Methacrylmonomer, einer Di- oder Polythiol-Zusammensetzung und einem Di- oder Polyvinyl-Monomer).

2. Verfahren nach Anspruch 1, wobei die Hartbeschichtungs-Monomerzusammensetzung ein UV-härtbares Hartbeschichtungsmonomer ausgewählt aus der Gruppe bestehend aus einem UV-härtbaren (Meth)acrylatmonomer, einem Um-härtbaren Epoxidmonomer, und einer Mischung daraus enthält.

3. Verfahren nach Anspruch 2, wobei das UV-härtbare (Meth)acrylatmonomer ausgewählt ist aus der Gruppe bestehend aus Pentaerythritoltetraacrylat, Tris[2-(acryloxy)ethyl]isocyanurat, Trimethylolpropyltriacrylat, Dipentaerythritolhexacrylat, 2,2,4,4,6,6-Hexahydro-2,2,4,4,6,6-Hexakis(2-((2-Methyl-1-oxo-2-Propenyl)oxy)ethoxy)-1,3,5,2,4,6-Triazatriphosphorin, U6HA (hexafunktionales Urethan-(Meth)acrylat, U4HA (tetrafunktionales Urethan-(Meth)acrylat), Tricyclodecandimethanoldiacrylat, Tris(2-hydroxyethyl)isocyanuratdiacrylat, und Mischungen daraus.

4. Verfahren nach Anspruch 3, wobei die UV-härtbare (Meth)acrylatmonomer-zusammensetzung ferner ein flexibles difunktionales (Meth)acrylatmonomer enthält, vorzugsweise ausgewählt aus einem oder mehreren der Gruppe bestehend aus Alkylendi(meth)acrylaten und Poly(alkylenoxid)di(meth)acrylaten.

5. Verfahren nach Anspruch 4, wobei das Alkylendi(meth)acrylat Hexandioldiacrylat ist.

6. Verfahren nach Anspruch 4, wobei das Poly(alkylenoxid)di(meth)acrylat ausgewählt ist aus einem oder mehreren der Gruppe bestehend aus Polyethylenglycol 200 Diacrylat, Polyethylenglycol 400 Diacrylat, Polyethylenglycol 600 Diacrylat, Tripropylenglycoldiacrylat und Polypropylenglycol 400 Diacrylat, Polyethylenglycol 200 Dimethacrylat, Polyethylenglycol 400 dimethacrylat und Polyethylenglycol 600 Dimethacrylat.

7. Verfahren nach einem der Ansprüche 2 bis 6, wobei die Hartbeschichtungs-Monomerzusammensetzung eine Mischung aus Tris[2-(acryloxy)ethyl]isocyanurat und Polyethylenglycoldiacrylat enthält, vorzugsweise in einem Verhältnis von 7:3.

8. Verfahren nach einem der Ansprüche 2 bis 7, wobei das UV-härtbare Epoxidmonomer ein difunktionales, trifunktionales oder multifunktionales Epoxidmonomer ist, vorzugsweise ausgewählt aus einem oder mehreren der Gruppe bestehend aus Ethylenglycoldiglycidylether, Diethylenglycoldiglycidylether, Polyethlylenglycoldiglycidylether, Propylenglycoldiglycidylether, Dipropylenglycoldiglycidylether, Tripropylengylcoldiglycidylether, Polypropylenglycoldiglycidylether, Neopentylglycoldiglycidylether, 1,6-Hexanedioldiglycidylehter, Glycerindiglycidylether, Pentaerythritoldiglycidylether, Trimethylolpropantriglycidylether, Pentaerythritoltriglycidylether, Glyceroltriglycidylether, Diglyceroltriglycidylether, Diglyceroltetraglycidylether, Pentaerythritoltetraglycidylether, Dipentaerythritoltetraglycidylether, Bisphenol A-Diglycidylether (BPADGE), Bisphenol F-Diglycidylether, und deren erweiterte Kettenanaloge, 1,4-Butanedioldiglycidylether, Diglycidylether von Tetrabromobisphenol A, und epoxidbasierte Ether von 4,4'-Biphenylen.

9. Verfahren nach einem der vorhergehenden Ansprüche, wobei die UV-härtbare Hartbeschichtungs-Monomerzusammensetzung einen Härteverstärker enthält, bevorzugt kolloidales Siliziumdioxid.

10. Verfahren nach einem der vorhergehenden Ansprüche, wobei das Präkursormaterial für das optische Element mit hohem Index ein Thiourethan ist.

11. Verfahren nach einem der vorhergehenden Ansprüche, wobei der Brechungsindex der Hartbeschichtungsschicht gesteigert wird durch die Beigabe von Hochindex-Kolloidpartikeln, bevorzugt ausgewählt aus der Gruppe bestehend aus Titandioxid, Zirkoniumdioxid, Antimondioxid, und Mischungen daraus,

12. Verfahren nach einem der vorhergehenden Ansprüche, wobei das optische Element ein Brillenglas ist.

13. Optisches Element mit hohem Index, welches eine Hartbeschichtung aufweist, welche nach dem Verfahren nach einem der Ansprüche 1 bis 12 gebildet ist.

14. Optisches Element mit hohem Index nach Anspruch 13, wobei das optische Element ein ist.

## Revendications

1. Procédé pour former un élément optique muni d'un revêtement, le procédé comprenant les étapes suivantes :
prévoir un assemblage de moule comportant des sections de moule opposées, chaque section de moule ayant une face de coulée formant une cavité de moule dans le moule lorsqu'il est assemblé ;
appliquer une composition de monomère de revêtement dur durcissable aux UV sur au moins une partie de la face de coulée d'au moins l'une des sections de moule pour former une couche de monomère de revêtement dur ;
exposer la couche de monomère de revêtement dur à un rayonnement UV dans des conditions permettant de former une couche de revêtement dur partiellement durcie ;
remplir le moule assemblé avec un matériau précurseur d'élément optique à indice élevé ; et
durcir le matériau précurseur d'élément optique et la couche de revêtement dur partiellement durcie pour former un élément optique à indice élevé comportant un revêtement dur, **caractérisé en ce que** le matériau précurseur d'élément otique à indice élevé est sélectionné parmi un ou plusieurs éléments du groupe comprenant les thiouréthanes, les épisulfures et la FINALITE® (un mélange monomère d'un monomère acrylique ou méthacrylique, d'un composé di- ou polythiol et d'un monomère di- ou polyvinylique).

2. Procédé selon la revendication 1, dans lequel la composition de monomère de revêtement dur comprend un monomère de revêtement dur durcissable aux UV sélectionné dans le groupe comprenant les monomères de (méth)acrylate durcissables aux UV, les monomères d'époxy durcissables aux UV, et leurs mélanges.

3. Procédé selon la revendication 2, dans lequel le monomère de (méth)acrylate durcissable aux UV est sélectionné dans le groupe comprenant le tétraacrylate de pentaérythritol, le tris[2-(acryloxy)éthyl]isocyanurate, le triacrylate, de triméthylol propyle, l'hexaacrylate de dipentaérythritol, la 2,2,4,4,6,6-hexahydro-2,2,4,4,6,6-hexakis(2-((2-méthyl-1-oxo-2-propényl)oxy)éthoxy)-1,3,5,2,4,6-triazatriphosphorine, le U6HA ((méth)acrylate d'uréthane hexa-fonctionnel), le U4HA ( (méth)acrylate d'uréthane têtra-fonctionnel), le diacrylate, de tricyclodécane diméthanol, le diacrylate, de tris(2-hydroxy-éthyl) isocyanurate, et leurs mélanges.

4. Procédé selon la revendication 3, dans lequel la composition de monomère de (méth)acrylate durcissable aux UV contient en outre un monomère de (méth)acrylate bifonctionnel souple, de préférence choisi parmi un ou plusieurs éléments du groupe comprenant les di(méth)acrylate d'alkyle et les di (méth) acrylates de poly(alkylèneoxide).

5. Procédé selon la revendication 4, dans lequel le di(méth)acrylate d'alkyle est du diacrylate, hexane diol.

6. Procédé selon la revendication 4, dans lequel le di(méth)acrylate de poly(alkylèneoxide) est sélectionné parmi un ou plusieurs éléments du groupe comprenant le diacrylate de polyéthylène glycol 200, le diacrylate, de polyéthylène glycol 400, le diacrylate de polyéthylène glycol 600, le diacrylate de tripropylène glycol et le diacrylate, de polypropylène glycol 400, le dimethacrylate de polyéthylène glycol 200, le diméthacrylated de polyéthylène glycol 400 et le diméthacrylate de polyéthylène glycol 600.

7. Procédé selon l'une quelconque des revendications 2 à 6, dans lequel la composition de monomère de revêtement dur comprend un mélange de tris[2-(acryloxy)éthyl]isocyanurate et de diacrylate de polyéthylène glycol, de préférence dans un rapport de 7:3.

8. Procédé selon l'une quelconque des revendications 2 à 7, dans lequel le monomère époxy durcissable aux UV est un monomère époxy bifonctionnel, trifonctionnel ou multi-fonctionnel, choisi de préférence parmi un ou plusieurs éléments du groupe comprenant l'éther diglycidylique d'éthylène glycol, l'éther diglycidylique de diéthylène glycol, l'éther diglycidylique de polyéthylène glycol, l'éther diglycidylique de propylene glycol, l'éther diglycidylique de dipropylène glycol, l'éther diglycidylique de tripropylène glycol, l'éther diglycidytique de polypropylène glycol, l'éther diglycidylique de néopentyl glycol, l'éther diglycidylique de 1,6 hexanediol, l'éther diglycidylique de glycérine, l'éther diglycidylique de pentaérythritol, l'éther triglycidylique de trimethylol propane, l'éther triglycidylique de pentaérythritol, l'éther triglycidylique de glycérol, l'éther triglycidylique de diglycérol, l'éther tétraglycidylique de diglycérol, l'éther tétraglycidylique de pentaérythritol, l'éther tétraglycidylique de dipentaérythritol, l'éther diglycidylique de bisphénol-A (BPADGE), l'éther diglycidylique de bisphénol-F, and leurs chaines étendues analogues, l'éther diglycidylique de 1,4-butanediol, les l'éthers diglycidyliques de tétrabromo-bisphénol-A, et les éthers à base d'époxy de 4,4'-biphénylène.

9. Procédé selon l'une quelconque des revendications précédentes, dans lequel la composition de monomère de revêtement dur durcissable aux UV contient un renforçateur de dureté, de préférence de la silice colloïdale.

10. Procédé selon l'une quelconque des revendications précédentes, dans lequel le matériau précurseur d'élément optique à indice élevé est un thiouréthane.

11. selon l'une quelconque des revendications précédentes, dans lequel l'indice de réfraction de la couche due revêtement dur est augmenté par l'ajout de particules colloïdales à indice élevé, de préférence choisies dans le groupe comprenant le dioxyde de titane, le dioxyde de zirconium, l'oxyde d'antimoine, et leurs mélanges.

12. Procédé selon l'une quelconque des revendications précédentes, dans lequel l'élément optique est une lentille ophtalmique.

13. Elément optique à indice élevé ayant un revêtement dur formé selon les procédés de l'une quelconque des revendications 1 à 12.

14. Elément otique à indice élevé selon la revendication 13, dans lequel l'élément otique est une lentille ophtalmique.
